# EUROPEAN PATENT SPECIFICATION

(11) **EP 1 445 089 B1**
(45) Date of publication and mention of the grant of the patent: **29.03.2006**
(21) Application number: 02079565.4
(22) Date of filing: 01.11.2002
(51) Int. Cl.: B29C 45/27

(54) **Screw connection assembly for tubes**
Verschraubte Rohrverbindung
Assemblage de tubes par vissage

(43) Date of publication of application: 11.08.2004
(73) Proprietor: Synventive Molding Solutions B.V., 3295 ZJ 's-Gravendeel (NL)
(72) Inventor: Sattler, Peter, 64673 Zwingenberg (DE); Liebram, Udo, 64319 Pfungstadt (DE)
(74) Representative: van Westenbrugge, Andries

(56) References cited:
- BE-A- 566 321
- DE-A- 3 515 169
- PATENT ABSTRACTS OF JAPAN vol. 018, no. 006 (M-1537), 7 January 1994 (1994-01-07) & JP 05 248586 A (MITSUBISHI PLASTICS IND LTD), 24 September 1993 (1993-09-24)

## Description

The invention relates to a screw connection assembly for use in a hot runner system comprising at least an elongated first part and a second part, the first part having at its inside a bore with a shoulder to engage the second part and an interface along which interface the first part and the second part are in contact, the first part at least at its inside having a screw thread, the second part at least at its outside having a screw thread, and, for orientation of the screw connection, a right-handed rectangular coordinate frame having its y-axis substantially parallel to the elongated first part.

More particular the invention relates to connections between a nozzle and an injection channel as well as between an injection channel and an injection manifold in a hot runner channel system.

Presently, connections known from the state of the art, between nozzles and injection channels as well as between injection channels and injection manifolds in a hot runner channel system are screw connections. Although these connections will, during normal operating conditions, not loosen themselves, there are circumstances (e.g. employing the connection contrary to specifications) in which the connection will loosen itself. Moreover, two parts of a screw connection, when disconnected, will upon reconnecting generally not have the same orientation relative to each other. To adjust the angular orientation of the parts relative to each other, it is necessary to unscrew the complete connection. Also, when cleaning a nozzle system the various part have to be disconnected. After cleaning the system must be reassembled. Then, it is important that the various parts are positioned in the same relative angular position to each other as before cleaning.

Document BE-A-566321 discloses a screw connection assembly comprising at least an elongated first part and a second part, the first part having at its inside a bore with a shoulder to engage the second part and an interface along which interface the first part and the second part are in contact, the first part at least at its inside having a first screw thread, the second part at least at its outside having a second screw thread.

It is an object of the present invention to provide a sealing between the two parts of a screw insert that will retain its sealing properties during varying and changing external conditions (stresses/impact).

It is a further object of the invention to provide a screw insert in which it is possible to return a first part into the same orientation and with the same rotational torque after removal of the first part upon reinserting it, relative to a second part to which the first screw insert was originally connected.

It is another object of the invention to keep the orientation and the rotational torque of two parts of an injection molding device relative to each other the same and provide secure sealing means between them.

It is another object of the invention to provide a method to obtain a predetermined relative angular orientation between two parts of a screw insert.

It is yet another object of the invention to provide a construction with which the angular orientation of two parts of a screw connection can relatively easily be adjusted.

Therefore, in a first embodiment the invention is characterized in that a cylindrically shaped third part is located between the first part and the second part, the third part comprising at its inside a third screw thread and at its outside a fourth screw thread, the fourth screw thread being complementary to the first screw thread at the inside of the first part, the third screw thread being complementary to the second screw thread of the outside of the second part, the first and fourth screw threads relative to the second and third screw threads being such that by rotation of the third part in the xz plane of the coordinate frame, the second part moves towards the shoulder of the first part. Once the desired relative angular orientation of the second part relative to the first part is obtained, by rotating the third part, the second part will only move axially towards the shoulder in the first part while keeping the relative angular orientation of the second part relative to the first part the same.

In another embodiment the invention is characterized in that the pitch of the first and fourth screw threads is different from the pitch of the second and third screw threads.

In still another embodiment the invention is characterized in that the pitch of the first and fourth screw threads is substantially equal to the pitch of the second and third screw threads.

In still another embodiment the invention is characterized in that the first and fourth screw threads rotate in a direction substantially equal to the direction in which the second and third screw threads rotate.

In still another embodiment the invention is characterized in that the pitches of the first and fourth screw threads rotate in a direction opposite to the direction in which the second and third screw threads rotate.

The embodiments as listed above have as a common result that the second part eventually will engage the shoulder of the first part, and a strong sealing between the second part and the first part will be obtained. Moreover, the first part and the second part move in axial direction only towards each other, which has the advantage that the contacting surfaces when engaging each other will not slide over each other, so no frictional forces will occur. Frictional forces may lead to 'galling'. By the construction according to the invention this effect is substantially eliminated.

In yet a another embodiment the invention is characterized in that the third part comprises attachment means. In this way, the third part can be engaged with a fastener tool (e.g. wrench). This facilitates operation on the third part and makes a strong bond between the first part and the second part possible.

In yet a another embodiment the invention is characterized in that the first part and the second part comprise complementary angular orienting means for orienting the first part in a predetermined angular position relative to the second part. This makes it possible for an insert after removal (for instance to clean the hot runner system) to be returned to the same position as before. The orienting means will ensure that only a specific position between the two parts can be obtained. This is especially advantageous when using not cylinder symmetrically inserts or nozzles. Besides, the orienting means provide a safety measure against an undesired rotation of the two parts relative to each other.

The invention will now be described with reference to the accompanying drawings in which:
Fig. 1 shows a screw connection according to the state of the art in a cut away view,
Fig. 2 shows a longitudinal cross-section of an embodiment according to the present invention,
Fig. 3 shows another embodiment according to the present invention and
Fig. 4 shows means to fix the angular orientation of two parts of a screw insert relative to each other.

To facilitate the process of explaining the invention, a right-handed rectangular coordinate frame 40 is used in connection with fig's 1-3. The y-axis of the coordinate frame is oriented in parallel with the center line of the tubular structures as displayed in fig's 1-3. A positive rotation in the xz plane is indicated by the "+" arrow, a negative rotation in the xz plane is indicated by the "-" arrow.

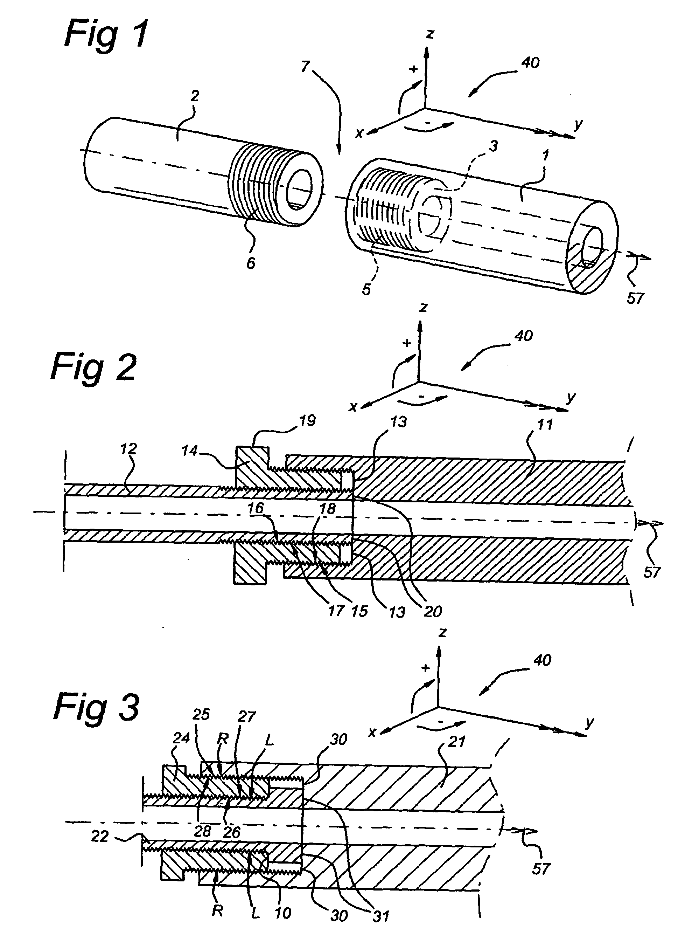

A screw connection as presently known is shown in fig. 1. The screw connection comprises a first part 1 and a second part 2. The first part 1 has a shoulder 3 which determines how far the second part 2 can be screwed in the first part 1. The inside of the first part 1 has a screw thread 5, as has the outside 6 of the second part 2. The screw thread on the inside 5 of the first part 1 is complementary to the screw thread 6 on the outside of the second part 2. The (central) axis of the screw connection is indicated by reference numeral 57 in Fig's 1-4. The screw connection is made by screwing the second part 2 into a first part 1 until the second part 2 engages the first part 1 in the shoulder 3 of the first part 1. Sealing between the first part 1 and the second part 2 is obtained by applying the required torque on the parts 1, 2 relative to each other. It is not possible to get a predetermined relative orientation of the two parts relative to each other and a predetermined torque.

In fig. 2 a cylindrically shaped third part, such as for instance a ring 14 is located between a first part 11 of a screw connection for instance an injection mold manifold or a tube and a second part 12, such as for instance a nozzle or another tube. The first part 11 has an inner screw thread 15 and comprises a shoulder 13. The second part 12 has an outer screw thread 16. The ring 14 comprises an inner screw thread 17 and an outer screw thread 18. The screw thread 16 is complementary to the screw thread 17, the screw thread 15 is complementary to the screw thread 18. The screw threads 16,17 have a pitch different from 15, 18. The pitch of screw threads 16, 17 is bigger than the pitch of screw threads 15, 18. As an example it is assumed that the screw threads 15, 16, 17 and 18 are right-hand screw threads, but the invention works equally well for left-hand screw threads, if the screw directions in the following are reversed. The ring 14 may be provided with engagement means 19 to which a fastening tool (not shown) can be attached. The screw connection is made by first screwing the ring 14 in the direction of the "-" arrow into the first part 11 until it engages the shoulder 13. Then the second part 12 is screwed in a the direction of the "-"arrow into the ring 14 until the second part 12 also engages the shoulder 13. Then, the ring 14 is screwed out of the first part 11 by rotating it in a direction contrary (in the direction of the "+" arrow) to the direction used previously. Due to the difference in pitch of the screw threads 15, 18 on one hand and 16, 17 on the other hand, an axial force will be present that presses the interfaces of the first part 11 and the second part 12, indicated by reference numeral 20 onto each other. To illustrate the previous, it is assumed that the ring 14 is rotated over an angle of 360 degrees. Then the ring 14 is displaced over a small axial distance (the axial distance between two subsequent turns) over the first part 11. The ring 14 is, however, displaced over a bigger axial distance over the second part 12. Since the ring 14 is rigid, this means that the first part 11 and the second part 12 must be pressed together over this difference in distance. In this way a good sealing is obtained.

The invention can also be used to obtain, after (re)connecting the two parts 11, 12, a predetermined angular orientation between the two parts 11, 12 while (re)connecting them. The ring 14 is screwed into the first part 11 as described above. The second part 12 is screwed into the ring 14 until it engages the shoulder 13. Then, the second part 12 is screwed counterclockwise until it has the desired angular orientation relative to the first part 11. Now, only the ring 14 is screwed counterclockwise to obtain the sealing between the first part 11 and the second part 12, while the two parts 11 and 12 are kept in a fixed angular position relative to each other.

Fig 3 shows a ring-shaped object 24 located between a first part 21 of a screw connection second part 12. The ring 24 engages the second part 22 of the screw connection in a shoulder 10. This makes it possible to screw the second part 22 into the ring 24 until it is halted by the shoulder 10. Another difference with the embodiment of fig 2 is the fact that the screw threads 27, 28 of the ring 24 have opposite pitch. For instance, if the inside of the ring 24 has a right-hand thread 27, then the outside of the ring 24 has a left-hand thread 28. This is indicated in fig. 3 by R for a right-hand thread an L for a left-hand thread. However, the invention works equally well if the left-hand thread is changed for a right-hand thread and vice versa and if the screw directions in the following are reversed. To make the screw connection, the second part 22 is screwed into the ring 24 until it engages the ring in the shoulder 10. Then, the assembly of the ring 24 and the second part 22 is screwed into the first part 21 until the second part 22 engages the first part 21 in the shoulder 30. By subsequently screwing the ring 24 further along the same direction the interfaces indicated by reference numeral 31 in fig. 3 of the first part 21 and the second part 22 are tightly pressed against each other and the sealing is made. In this embodiment there is no need for a difference in pitch displacement, only the opposite direction of the threads 27, 28 (right-hand vs. left-hand) is important.

It is possible to orient the first part 21 and the second part 22 in a predetermined relative angular position in the following way. The assembly of the ring 24 and the second part 22 is screwed into the first part 21 as far as possible along the screw thread 25 and just before engaging the shoulder 30 the desired angular orientation between the first part 21 and the second part 22 is established. Then, only the ring 24 is rotated while the angular position of the first part 21 relative to the second part 22 is kept fixed.

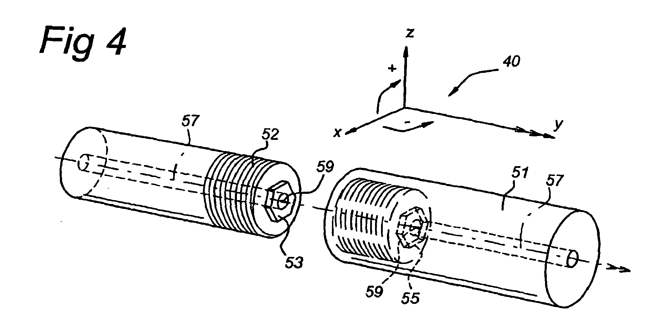

In Fig. 4 it is illustrated how the invention can be used to obtain a predetermined relative angular rotation between two parts 51, 52 of a screw connection. The third intermediate part with reference numeral 14, 24 in figures 2 and 3 respectively, is, to facilitate the explanation, omitted. The part 52 is provided with orienting means 53 in this case a regular hexagon which fits to the complementary regular hexagon 55 cut away in the part 51. Since the hexagon is regular and has it axis of symmetry 59 coinciding with the (central) axis 57 of the screw insert there are several (six) ways in which the part 52 can be connected to the part 52. The orienting means may also comprise a octagon fitting to a complementary cut away octagon in the part 51. The location of the cut away octagon (and other cut away orienting means) may be on the part 52 or the part 51 as desired. Other, non symmetric, arrangements are also possible, for instance a notch on either of the part 51, 52 to which a complementary bulge fits, or a small unevenness provided in the surface of the part 51 where the part 51 meets the part 52 in a complementary unevenness provided on the part 52. In this case there is only one orientation of the part 51 to the part 52 possible. This orientation is predetermined by the location of the complementary orienting means. Additionally, and for example, one of the parts 51, 52 can be equipped with a pen fitting to a complementary hole on the other part.

## Claims

1. Screw connection assembly for use in a hot runner system comprising at least an elongated first part (11, 21) and a second part (12, 22), the first part (11, 21) having at its inside a bore with a shoulder (13, 30) to engage the second part (12, 22) and an interface (20, 31) along which interface (20, 31) the first part (11, 21) and the second part (12, 22) are in contact, the first part (11, 21) at least at its inside having a first screw thread (15, 25), the second part (12, 22) at least at its outside having a second screw thread (16, 26),
**characterized in that**
a cylindrically shaped third part (14, 24) is located between the first part (11, 21) and the second part (12, 22), the third part (14, 24) comprising at its inside a third screw thread (17, 27) and at its outside a fourth screw thread (18, 28), the fourth screw thread (18, 28) being complementary to the first screw thread (15, 25) at the inside of the first part (11, 21), the third screw thread (17, 27) being complementary to the second screw thread (16, 26) of the outside of the second part (12, 22), the first and fourth screw threads (15, 25, 18, 28) relative to the second and third screw threads (16, 26, 17, 27) being such that by rotation of the third part (14, 24), the second part (12, 22) moves towards the shoulder (13, 30) of the first part (11, 21).

2. Screw connection assembly according to claim 1 **characterized in that** the pitch of the first and fourth screw threads (15, 25, 18, 28) is different from the pitch of the second and third screw threads (16, 26, 17, 27).

3. Screw connection assembly according to claim 1 **characterized in that** the pitch of the first and fourth screw threads (15, 25, 18, 28) is substantially equal to the pitch of the second and third screw threads (16, 26, 17, 27).

4. Screw connection assembly according to any of the claims 1 to 2 **characterized in that** the first and fourth screw threads (15, 25, 18, 28) rotate in a direction equal to the direction in which the second and third screw threads (16, 26, 17, 27) rotate.

5. Screw connection assembly according to any of the claims 1 to 3 **characterized in that** the pitches of the first and fourth screw threads (15, 25, 18, 28) rotate in a direction opposite to the direction in which the second and third screw threads (16, 26, 17, 27) rotate.

6. Screw connection assembly according to any of the preceding claims **characterized in that** the third part (14, 24) comprises attachment means (19).

7. Screw connection assembly according to any of the preceding claims **characterized in that** the first part (11,21) and the second part (12,22) comprise complementary angular orienting means for orienting the first part (11, 21) in a predetermined angular position relative to the second part (12, 22).

8. Screw connection assembly according to claim 7 **characterized in that** the orienting means comprise at least one mortise dowel joint.

## Patentansprüche

1. Schraubenverbindungsanordnung zur Verwendung bei einem Heißkanalsystem, umfassend mindestens ein längliches erstes Teil (11, 21) und ein zweites Teil (12, 22), wobei das erste Teil (11, 21) an seiner Innenseite eine Bohrung mit einer Schulter (13, 30), um das zweite Teil (12, 22) in Eingriff zu nehmen, und eine Grenzfläche (20, 31) aufweist, wobei entlang der Grenzfläche (20, 31) das erste Teil (11, 21) und das zweite Teil (12, 22) in Kontakt sind, wobei das erste Teil (11, 21) mindestens an seiner Innenseite ein erstes Schraubengewinde (15, 25) und das zweite Teil (12, 22) mindestens an seiner Außenseite ein zweites Schraubengewinde (16, 26) aufweist,
**dadurch gekennzeichnet, dass**
ein zylindrisch geformtes drittes Teil (14, 24) zwischen dem ersten Teil (11, 21) und dem zweiten Teil (12, 22) angeordnet ist, wobei das dritte Teil (14, 24) an seiner Innenseite ein drittes Schraubengewinde (17, 27) und an seiner Außenseite ein viertes Schraubengewinde (18, 28) umfasst, wobei das vierte Schraubengewinde (18, 28) zu dem ersten Schraubengewinde (15, 25) an der Innenseite des ersten Teils (11, 21) komplementär ist, wobei das dritte Schraubengewinde (17, 27) zu dem zweiten Schraubengewinde (16, 26) der Außenseite des zweiten Teils (12, 22) komplementär ist, wobei die ersten und vierten Schraubengewinde (15, 25, 18, 28) bezogen auf die zweiten und dritten Schraubengewinde (16, 26, 17, 27) derart sind, dass sich durch Rotation des dritten Teils (14, 24) das zweite Teil (12, 22) zu der Schulter (13, 30) des ersten Teils (11, 21) hin bewegt.

2. Schraubenverbindungsanordnung gemäß Anspruch 1, **dadurch gekennzeichnet, dass** die Ganghöhe der ersten und vierten Schraubengewinde (15, 25, 18, 28) von der Ganghöhe der zweiten und dritten Schraubengewinde (16, 26, 17, 27) unterschiedlich ist.

3. Schraubenverbindungsanordnung gemäß Anspruch 1, **dadurch gekennzeichnet, dass** die Ganghöhe der ersten und vierten Schraubengewinde (15, 25, 18, 28) im Wesentlichen gleich der Ganghöhe der zweiten und dritten Schraubengewinde (16, 26, 17, 27) ist.

4. Schraubenverbindungsanordnung gemäß einem der Ansprüche 1 bis 2, **dadurch gekennzeichnet, dass** sich die ersten und vierten Schraubengewinde (15, 25, 18, 28) in einer Richtung drehen, die gleich der Richtung ist, in der sich die zweiten und dritten Schraubengewinde (16, 26, 17, 27) drehen.

5. Schraubenverbindungsanordnung gemäß einem der Ansprüche 1 bis 3, **dadurch gekennzeichnet, dass** sich die Ganghöhen der ersten und vierten Schraubengewinde (15, 25, 18, 28) in einer Richtung drehen, die der Richtung entgegengesetzt ist, in der sich die zweiten und dritten Schraubengewinde (16, 26, 17, 27) drehen.

6. Schraubenverbindungsanordnung gemäß einem der vorhergehenden Ansprüche, **dadurch gekennzeichnet, dass** das dritte Teil (14, 24) ein Befestigungsmittel (19) umfasst.

7. Schraubenverbindungsanordnung gemäß einem der vorhergehenden Ansprüche, **dadurch gekennzeichnet, dass** das erste Teil (11, 21) und das zweite Teil (12, 22) ein komplementäres Winkelorientierungsmittel zum Orientieren des ersten Teils (11, 21) in eine vorbestimmte Winkelposition bezogen auf das zweite Teil (12, 22) umfassen.

8. Schraubenverbindungsanordnung gemäß Anspruch 7, **dadurch gekennzeichnet, dass** das Orientierungsmittel mindestens eine Zapfung umfasst.

## Revendications

1. Ensemble de liaison fileté destiné à être utilisé dans un système à canaux chauds, comprenant au moins une première partie allongée (11, 21) et une deuxième partie (12, 22), la première partie (11, 21) présentant à l'intérieur un alésage comportant un épaulement (13, 30) afin de venir en prise avec la deuxième partie (12, 22) et une interface (20, 31) le long de laquelle interface (20, 31) la première partie (11, 21) et la deuxième partie (12, 22) sont en contact, la première partie (11,21) comportant au moins à l'intérieur un premier filetage (15, 25), la deuxième partie (12, 22) comportant au moins à l'extérieur un deuxième filetage (16, 26) ;
**caractérisé en ce que** :
une troisième partie (14, 24) de forme cylindrique est située entre la première partie (11, 21) et la deuxième partie (12, 22), la troisième partie (14, 24) comprenant à l'intérieur un troisième filetage (17, 27) et à l'extérieur un quatrième filetage (18, 28), le quatrième filetage (18, 28) étant complémentaire du premier filetage (15, 25) à l'intérieur de la première partie (11, 21), le troisième filetage (17, 27) étant complémentaire du deuxième filetage (16, 26) à l'extérieur de la deuxième partie (12, 22), les premier et quatrième filetages (15, 25, 18, 28) étant tels, par rapport aux deuxième et troisième filetages (16, 26, 17, 27), que par rotation de la troisième partie (14, 24) la deuxième partie (12, 22) se déplace en direction de l'épaulement (13, 30) de la première partie (11, 21).

2. Ensemble de liaison fileté selon la revendication 1, **caractérisé en ce que** le pas des premier et quatrième filetage (15, 25, 18, 28) est différent de celui des deuxième et troisième filetages (16, 26, 17, 27).

3. Ensemble de liaison fileté selon la revendication 1, **caractérisé en ce que** le pas des premier et quatrième filetages (15, 25, 18, 28) est sensiblement égal à celui des deuxième et troisième filetages (16, 26, 17, 27).

4. Ensemble de liaison fileté selon l'une quelconque des revendications 1 ou 2, **caractérisé en ce que** les premier et quatrième filetages (15, 25, 18, 28) ont la même direction de rotation que celle des deuxième et troisième filetages (16,26,17,27).

5. Ensemble de liaison fileté selon l'une quelconque des revendications 1 à 3, **caractérisé en ce que** les pas des premier et quatrième filetages (15, 25, 18, 28) ont une direction de rotation opposée à celle des deuxième et troisième filetages (16, 26, 17, 27).

6. Ensemble de liaison fileté selon l'une quelconque des revendications précédentes, **caractérisé en ce que** la troisième partie (14, 24) comprend des moyens de fixation (19).

7. Ensemble de liaison fileté selon l'une quelconque des revendications précédentes, **caractérisé en ce que** la première partie (11, 21) et la deuxième partie (12, 22) comprennent des moyens d'orientation angulaires complémentaires pour orienter la première partie (11, 21) dans une position angulaire prédéterminée par rapport à la deuxième partie (12, 22).

8. Ensemble de liaison fileté selon la revendication 7, **caractérisé en ce que** les moyens d'orientation comprennent au moins un assemblage à tenon et mortaise.
